# FASCICULE DE BREVET EUROPEEN

(11) **EP 2 311 172 B1**
(45) Date de publication et mention de la délivrance du brevet: **07.12.2016**
(21) Numéro de dépôt: 09740403.2
(22) Date de dépôt: 28.07.2009
(51) Int. Cl.: H02K 9/06

(54) **MACHINE ELECTRIQUE TOURNANTE**
ELEKTRISCHE DREHMASCHINE
ROTATING ELECTRICAL MACHINE

(30) Priorité: 12.08.2008 FR 0855543
(43) Date de publication de la demande: 20.04.2011
(73) Titulaire: Moteurs Leroy Somer, 16000 Angouleme (FR)
(72) Inventeur: DUTAU, Alexis, F-16000 Angouleme (FR)
(74) Mandataire: Nony
(86) Numéro de dépôt international: PCT/FR2009/051519
(87) Numéro de publication internationale: WO 2010/018334

(56) Documents cités:
- EP-A- 0 238 080
- EP-A- 0 387 743
- FR-A- 2 639 162
- FR-A- 2 800 931
- FR-A1- 2 723 408
- JP-A- 60 257 736
- US-A1- 2004 013 526
- US-A1- 2006 251 509

## Description

La présente invention concerne les machines électriques tournantes et plus particulièrement le refroidissement de telles machines.

Il est connu d'entraîner avec le rotor un ventilateur qui assure la circulation d'un fluide de refroidissement au travers de la machine, par exemple de l'air.

EP 0 238 080 porte sur un alternateur d'automobile comportant deux ventilateurs permettant une circulation d'air entre des entrées d'air et des sorties d'air, les entrées d'air étant plus proches de l'arbre que les sorties d'air, plus proches de la périphérie extérieure de la machine. EP 0 238 080 ne divulgue pas une circulation d'air à travers le stator dans au moins un canal ménagé entre le stator et le carter dans lequel l'air circule.

Dans JP 60-257736, il n'y a qu'un seul ventilateur ou l'air entre dans la machine par une entrée d'air centrale.

EP 0 387 743 ne divulgue pas deux flux d'air se rejoignant, puisque il n'y a qu'un seul flux d'air circulaire.

L'invention vise à perfectionner encore le refroidissement de ces machines, dites « ouvertes ».

L'invention a pour objet, selon l'un de ses aspects, une machine électrique tournante comprenant les caractéristiques de la revendication 1.

L'invention permet d'augmenter le débit global d'air traversant la machine, et donc les échanges convectifs au niveau du rotor ou du stator, voire les deux.

L'invention permet d'améliorer les échanges convectifs au sein des machines électriques tournantes ouvertes.

Les premier et deuxième ventilateurs sont dans l'invention disposés en série, c'est-à-dire que les flux d'air qui les traversent sont orientés chacun dans le même sens de circulation par rapport à l'axe de rotation de la machine.

Les premier et/ou deuxième ventilateurs peuvent être centrifuges, hélico-centrifuges ou autre. Les deux ventilateurs peuvent être du même type ou chacun d'un type différent. Le premier ventilateur peut notamment être axial ou hélico-centrifuge et le deuxième ventilateur centrifuge ou hélico-centrifuge.

Le premier ventilateur peut comporter en outre une virole externe reliant des extrémités radiales de pales entre elles. Les pales peuvent s'étendre d'une virole interne à la virole externe, en étant par exemple inclinées par rapport à l'axe de rotation de la machine, de manière à favoriser un sens de circulation du flux d'air dans le ventilateur.

Le premier ventilateur peut être configuré pour minimiser les pertes aérauliques sur les pales. Le rendement de la machine peut ainsi être peu influencé par la mise en place de ce premier ventilateur.

La virole externe peut permettre d'optimiser les performances du premier ventilateur, permettant de minimiser voire de supprimer la chute de pression en bout de pale, et permet de diriger le flux d'air.

La présence du premier ventilateur permet de créer une composante axiale dans le flux d'air qui se projette sur les faces des têtes de bobines du stator et/ou du rotor. La composante axiale de la vitesse du flux d'air peut ainsi être plus élevée. Cela peut permettre l'apparition d'un impact de jet sur les bobinages du rotor, ce qui peut induire une augmentation des coefficients d'échanges convectifs et un meilleur refroidissement du rotor.

Dans un ventilateur axial, le sens de l'écoulement d'air à l'entrée et à la sortie du ventilateur reste parallèle à l'axe de rotation de la machine.

Dans un ventilateur hélico-centrifuge ou centrifuge, le sens de l'écoulement de l'air change de direction en traversant le ventilateur. Ce changement de direction peut par exemple être supérieur à 75°, par exemple de 90° environ pour un ventilateur centrifuge et peut être compris entre 45° et 75°, par exemple de 60° environ, pour un ventilateur hélico-centrifuge.

En outre, l'augmentation de la vitesse de l'air entrant et les effets de la centrifugation dus à la rotation du rotor peuvent se conjuguer afin de permettre d'améliorer l'écoulement de l'air autour des bobinages du stator, et notamment d'augmenter leur turbulence, ce qui peut permettre d'induire une augmentation des coefficients d'échanges convectifs au stator et donc d'améliorer le refroidissement du stator.

Ainsi, grâce à l'invention, l'air est guidé en direction des bobinages du stator et du rotor et permet d'améliorer le refroidissement du stator et/ou du rotor, et d'améliorer les performances de la ventilation.

Le deuxième ventilateur, encore appelé ventilateur principal, peut être configuré pour créer une dépression dans la machine et générer un flux d'air sortant.

Le premier ventilateur est disposé du côté du stator opposé au deuxième ventilateur, et le premier ventilateur est configuré pour générer un flux d'air entrant dans la machine. Ce premier ventilateur peut être configuré pour favoriser les échanges thermiques autour des têtes de bobines du rotor et/ou du stator. Il permet d'accélérer la vitesse de l'air entrant dans la machine.

Le premier ventilateur peut comporter une virole interne servant de moyeu et maintenue sur l'arbre tournant de la machine, et des pales s'étendant à partir de la virole interne.

La présence des viroles interne et externe peut également permettre de faciliter le montage du premier ventilateur sur l'arbre de la machine. La virole interne permet d'entrainer le premier ventilateur en rotation et permet son positionnement axial. Elle peut être montée avec une clavette ou par frettage sur l'arbre. La virole externe peut permettre d'optimiser les performances du premier ventilateur, permettant de minimiser voire de supprimer la chute de pression en bout de pale, et permet de diriger le flux d'air.

Un premier flux d'air peut circuler dans au moins un canal ménagé entre le stator, notamment un paquet de tôles du stator, et un carter de la machine. Ce canal peut être formé au moins partiellement entre des ailettes du paquet de tôles, par exemple. La dimension radiale du canal peut par exemple être comprise entre 2 et 100 mm. L'air peut notamment circuler tout autour du paquet de tôles, sur 360° autour de l'axe de rotation de la machine.

Le rotor définit un entrefer avec le stator. Un deuxième flux d'air peut circuler dans cet entrefer.

Les deux flux d'air peuvent circuler chacun dans le même sens par rapport à l'axe de rotation de la machine.

Les ventilateurs peuvent être agencés pour amener l'air des premier et deuxième flux d'air à se rejoindre avant de gagner le deuxième ventilateur et plus particulièrement les pales de celui-ci.

Les premier et deuxième flux d'air peuvent être formés à partir d'une ou plusieurs entrées d'air communes dans la machine.

Le premier flux d'air peut être amené à contourner des têtes de bobines du stator avant de rejoindre le deuxième flux d'air. Le deuxième flux d'air peut encore rester indépendant du premier.

Le deuxième ventilateur peut définir des canaux d'éjection d'air orientés obliquement par rapport à l'axe de rotation de la machine.

Le débit du premier flux d'air peut par exemple être compris entre 0 et 20 m³/s à une température de fonctionnement de 20°C, celui du deuxième flux d'air peut par exemple être compris entre 0 et 20 m³/s à une température de fonctionnement de 20°C.

La machine est dépourvue, dans des exemples de réalisation, d'entrée d'air ou de sortie d'air à mi-longueur de la machine.

La machine peut constituer un alternateur. Dans ce cas, l'air peut pénétrer dans la machine par des ouvertures disposées autour d'une excitatrice de l'alternateur. L'alternateur peut être à excitatrice intégrée. La machine peut encore être un moteur.

La puissance électrique de la machine est par exemple supérieure ou égale à 1 kVA.

L'invention a encore pour objet, selon un autre de ses aspects, un procédé de refroidissement d'une machine électrique tournante comprenant les caractéristiques de la revendication 11.

L'invention pourra être mieux comprise à la lecture de la description détaillée qui va suivre, d'exemples de mise en oeuvre non limitatifs de celle-ci, et à l'examen du dessin annexé, sur lequel :
- la figure 1 représente, en vue de côté, une machine réalisée conformément à l'invention,
- la figure 2 est une vue en perspective éclatée, après enlèvement du carter et du stator, de la machine de la figure 1,
- la figure 3 représente un détail de la figure 2,
- la figure 4 est une coupe longitudinale schématique et partielle de la machine de la figure 1,
- la figure 5 est une vue en perspective éclatée, après enlèvement du carter et du stator d'une variante de réalisation, et
- la figure 6 représente un détail de la figure 5.

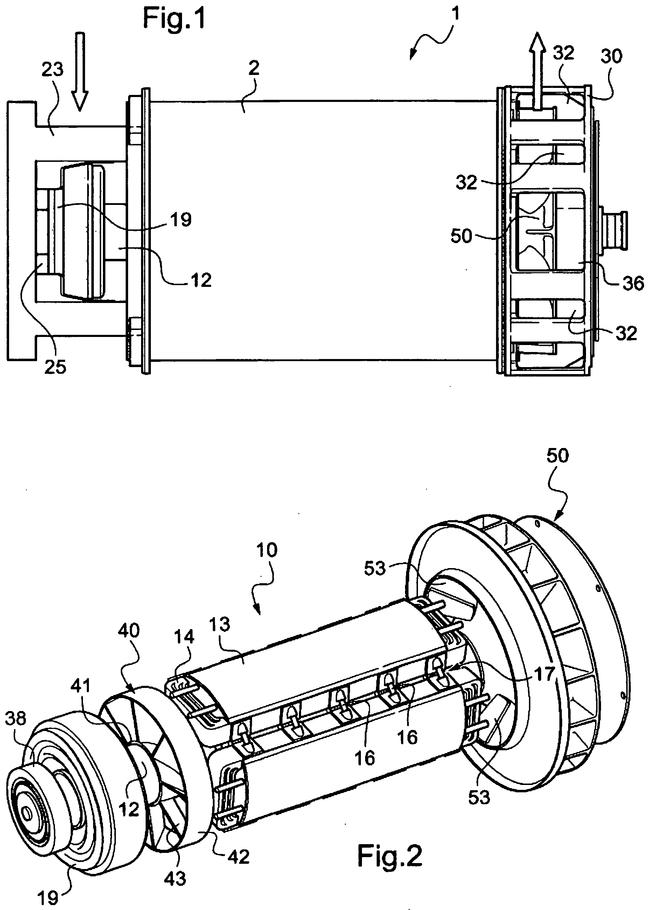

La machine électrique tournante 1 représentée sur les figures 1 à 4 comporte un carter 2, duquel est solidaire un stator 4 qui comporte un paquet de tôles magnétiques statoriques et des enroulements 5 définissant des têtes de bobines.

La machine 1 comporte également un rotor 10 qui comporte un arbre 12 portant un paquet de tôles rotoriques 13 et des bobinages 14 définissant des têtes de bobines.

Dans l'exemple considéré, la machine 1 est un alternateur de forte puissance et le rotor, encore appelé roue polaire, comporte des cales 16 qui maintiennent les bobinages 14, comme visible sur la figure 2.

Des canaux interpolaires 17 sont formés entre les pôles du rotor, comme on peut le voir notamment à la figure 2.

Le rotor 10 peut porter une excitatrice 19 qui peut interagir avec un stator d'excitatrice 20 logé au sein d'un premier flasque d'extrémité 23, lequel est dans l'exemple considéré rapporté sur le carter 2 à une extrémité axiale de celui-ci, et supporte des roulements 38.

Le flasque 23 comporte des ajours 25 qui définissent des entrées d'air de refroidissement de la machine.

La machine 1 comporte également un deuxième flasque d'extrémité 30, disposé à l'opposé du premier, qui comporte des ouvertures 32 pour l'évacuation de l'air de refroidissement de la machine.

Le deuxième flasque d'extrémité 30 supporte un ensemble de roulement 36.

Le rotor 10 entraîne en rotation un premier ventilateur 40, lequel est partiellement logé à l'intérieur du premier flasque d'extrémité 23 dans le carter de la machine, et un deuxième ventilateur 50, lequel est partiellement logé à l'intérieur du deuxième flasque d'extrémité 30.

Le premier ventilateur 40 comporte une virole interne 41 fixée à l'arbre de la machine et une virole externe 42 reliant des pales 43.

Le deuxième ventilateur 50 comporte un canal 52 au sein duquel sont disposées des pales 53.

Les premier 40 et deuxième 50 ventilateurs coopèrent pour créer un premier flux F1 d'air de refroidissement circulant depuis les entrées d'air 25 dans au moins un passage 60 situé entre le carter 2 et le paquet de tôles statoriques, et un deuxième flux F2 circulant dans l'entrefer 70 de la machine.

Le premier ventilateur 40 crée un flux d'air de refroidissement circulant entre les entrées d'air 25 vers d'une part les têtes de bobines du rotor et d'autre part les têtes de bobines du stator, avant de pénétrer dans l'entrefer et dans le passage 60 pour traverser le rotor et le stator en direction du deuxième ventilateur 50. L'air peut également circuler dans les canaux interpolaires 17.

Les deux flux d'air F1 et F2 peuvent se rejoindre, le premier flux d'air contournant les têtes de bobines du stator avant de rejoindre le deuxième flux d'air et de pénétrer dans le deuxième ventilateur 50 pour sortir de la machine.

En fonctionnement, les ventilateurs sont entraînés en rotation par l'arbre de la machine et de l'air est aspiré dans la machine par le premier ventilateur et expulsé de la machine par le deuxième ventilateur.

L'air peut sortir de la machine en étant orienté radialement et obliquement en éloignement du plan médian transversal de la machine.

Le paquet de tôles statoriques peut comporter des ailettes et/ou des canaux, disposés ou non en quinconce, afin d'accroître les échanges convectifs.

Les flasques d'extrémité peuvent avoir des formes particulières de type volute pour permettre d'obtenir de meilleures performances aérauliques. De plus, afin d'éviter les recirculations du fluide de refroidissement entre les entrées et les sorties, le flasque 30 peut être agencé de telle sorte que le flux d'air sortant soit orienté à l'opposé de la partie centrale de la machine, vers son extrémité.

Dans l'exemple de réalisation illustré sur les figures 1 à 4, la virole externe 42 du premier ventilateur présente un diamètre correspondant sensiblement à celui du rotor, de sorte que le bord libre de la virole 42 est situé sensiblement dans le prolongement de la surface radialement intérieure du stator.

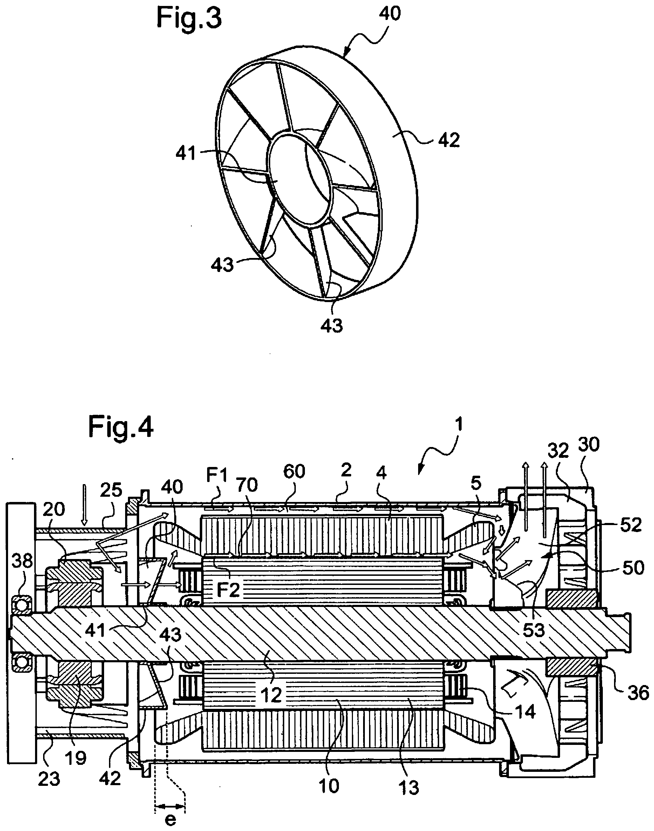

Cette virole vient en recouvrement axial avec les têtes de bobines du stator sur une distance *l*, comme on peut le voir sur la figure 4.

Dans l'exemple considéré, la virole externe 42 est pleine circonférentiellement mais on ne sort pas du cadre de la présente invention s'il en est autrement et si cette virole 42 comporte par exemple des ajours, par exemple sur la portion qui vient en recouvrement de têtes des bobines. Ces ajours peuvent par exemple se présenter sous la forme d'encoches et permettre de diminuer les pertes de charge.

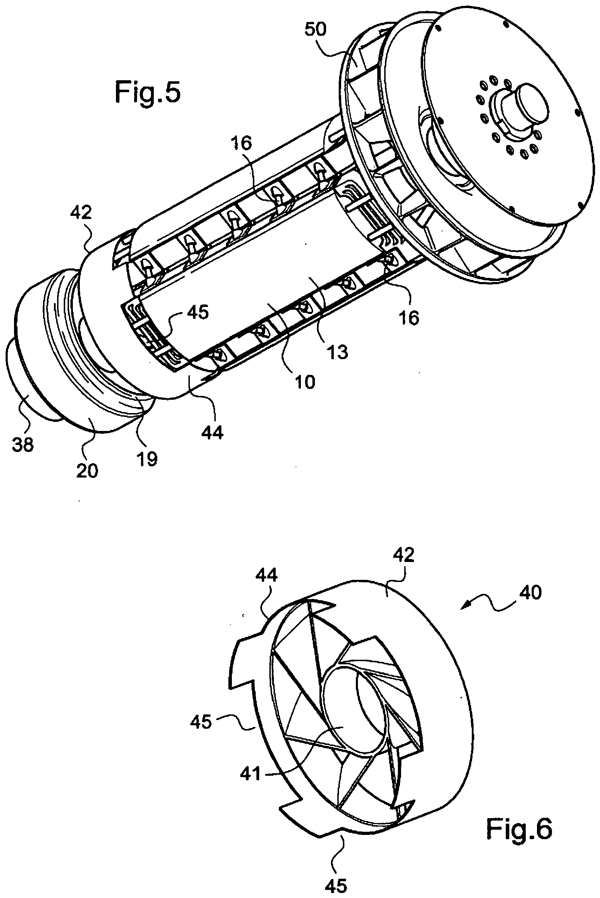

Dans la variante de réalisation illustrée aux figures 5 et 6, la virole externe 42 peut être plus large que la virole interne 41, comportant un voile de matière 44 venant en recouvrement des têtes de bobines du rotor. Le voile de matière 44 peut être pourvu d'ajours 45 permettant de limiter les pertes de charge. Ces ajours 45 peuvent notamment être ménagés au niveau des pôles du rotor, comme on peut le voir sur la figure 5. Entre les ajours 45, le voile de matière 44 vient en recouvrement des canaux interpolaires 17 ménagés entre les pôles du rotor.

Bien entendu, l'invention n'est pas limitée à l'exemple illustré.

La machine peut être réalisée différemment, notamment quant à la forme des ventilateurs, celle du ou des rotors et/ou du ou des stators. La machine peut être dépourvue d'excitatrice. La machine peut être à rotor intérieur, comme illustré, ou à rotor extérieur. La machine peut ne pas être un alternateur mais un moteur.

Au moins l'un des ventilateurs peut être réalisé avec des canaux et/ou pales disposés autrement.

L'invention s'applique à toutes machines ouvertes refroidies par un fluide.

L'expression « comportant un » doit être comprise comme étant synonyme de « comportant au moins un », sauf si le contraire est spécifié.

## Revendications

1. Machine électrique tournante comportant un rotor (10) tournant relativement à un stator (4), le rotor entraînant en rotation un premier ventilateur (40) disposé à une première extrémité du stator, et un deuxième ventilateur (50) disposé à une deuxième extrémité du stator opposée à la première extrémité, les premier et deuxième ventilateurs étant configurés pour générer une circulation d'air du premier ventilateur au deuxième ventilateur à travers le rotor et le stator, le premier ventilateur comportant une virole externe (42) reliant des extrémités radiales de pales (43) entre elles, un premier flux (F1) d'air pouvant circuler dans au moins un canal ménagé entre le stator, notamment un paquet de tôles du stator, et un carter de la machine,
machine dans laquelle un deuxième flux d'air peut circuler dans l'entrefer, et
dans laquelle les ventilateurs sont agencés pour amener l'air des premier et deuxième flux d'air à se rejoindre avant de gagner le deuxième ventilateur (50).

2. Machine selon la revendication précédente, dans laquelle le deuxième ventilateur est configuré pour créer une dépression dans la machine et générer un flux d'air sortant.

3. Machine selon l'une quelconque des revendications précédentes, dans laquelle le premier ventilateur est configuré pour générer un flux d'air entrant dans la machine.

4. Machine selon l'une quelconque des revendications précédentes, dans laquelle le premier ventilateur comporte une virole interne (41) qui est maintenue sur un arbre de la machine, et des pales (43) s'étendant à partir de la virole interne.

5. Machine selon la revendication précédente, dans laquelle les pales sont inclinées par rapport à l'axe de rotation de la machine.

6. Machine selon l'une quelconque des revendications précédentes, dans laquelle les premier et deuxième flux d'air sont formés à partir d'une ou plusieurs entrées d'air communes.

7. Machine selon l'une quelconque des revendications précédentes, la machine constituant un alternateur.

8. Machine selon la revendication précédente, dans laquelle l'air pénètre dans la machine par des ouvertures disposées autour d'une excitatrice de la machine.

9. Machine selon l'une quelconque des revendications précédentes, le premier ventilateur étant axial ou hélico-centrifuge.

10. Machine selon l'une quelconque des revendications précédentes, le second ventilateur étant centrifuge ou hélico-centrifuge.

11. Procédé de refroidissement d'une machine électrique tournante, dans lequel le refroidissement s'effectue en faisant circuler deux flux d'air entre des entrées d'air et des sorties d'air, le premier flux d'air circulant entre le stator et le carter de la machine et le deuxième flux d'air circulant dans l'entrefer, les deux flux d'air circulant d'une extrémité à l'autre de la machine sous l'action de deux ventilateurs, les premier et deuxième flux d'air se rejoignant avant de gagner le deuxième ventilateur.

## Patentansprüche

1. Elektrische Drehmaschine mit einem Rotor (10), der sich relativ zu einem Stator (4) dreht, wobei der Rotor einen ersten Lüfter (40), der an einem ersten Ende des Stators angeordnet ist, und einen zweiten Lüfter (50), der an einem zweiten Ende des Stators gegenüberliegend zu dem ersten Ende angeordnet ist, zur Rotation antreibt, wobei die ersten und zweiten Lüfter dazu konfiguriert sind, eine Luftströmung von dem ersten Lüfter zu dem zweiten Lüfter durch den Rotor und den Stator hindurch zu erzeugen, wobei der erste Lüfter einen äußeren Mantel (42) aufweist, der radiale Enden von Schaufeln (43) miteinander verbindet, wobei ein erster Luftstrom (F1) in wenigstens einem Kanal fließen kann, der zwischen dem Stator, insbesondere einem Blechpaket des Stators, und einem Gehäuse der Maschine fließen kann,
in welcher Maschine ein zweiter Luftstrom im Luftspalt fließen kann und bei der die Lüfter dazu eingerichtet sind, die ersten und zweiten Luftströme zur Vereinigung zu bringen, bevor sie den zweiten Lüfter (50) erreichen.

2. Maschine nach dem vorstehenden Anspruch, bei der der zweite Lüfter dazu konfiguriert ist, einen Unterdruck in der Maschine zu schaffen und einen austretenden Luftstrom zu erzeugen.

3. Maschine nach einem der vorstehenden Ansprüche, bei der der erste Lüfter dazu konfiguriert ist, einen in die Maschine eintretenden Luftstrom zu erzeugen.

4. Maschine nach einem der vorstehenden Ansprüche, bei der der erste Lüfter einen inneren Mantel (41) aufweist, der auf einer Welle der Maschine gehalten ist, und die Schaufeln (43) von dem inneren Mantel ausgehen.

5. Maschine nach dem vorstehenden Anspruch, bei der die Schaufeln in Bezug auf die Drehachse der Maschine geneigt sind.

6. Maschine nach einem der vorstehenden Ansprüche, bei der die ersten und zweiten Luftströme von einem oder mehreren gemeinsamen Lufteinlässen ausgehend gebildet werden.

7. Maschine nach einem der vorstehenden Ansprüche, bei der die Maschine einen Wechselstromgenerator bildet.

8. Maschine nach dem vorstehenden Anspruch, bei der die Luft in die Maschine über Öffnungen eindringt, die um eine Erregerspule der Maschine herum angeordnet sind.

9. Maschine nach einem der vorstehenden Ansprüche, bei der der erste Lüfter ein Axiallüfter oder ein Schraubenradlüfter ist.

10. Maschine nach einem der vorstehenden Ansprüche, bei der der zweite Lüfter ein Radiallüfter oder ein Schraubenradlüfter ist.

11. Verfahren zum Kühlen einer elektrischen Drehmaschine, bei dem die Kühlung dadurch bewirkt wird, dass man zwei Luftströme zwischen Lufteinlässen und Luftauslässen zirkulieren lässt, wobei der erste Luftstrom zwischen dem Stator und dem Gehäuse der Maschine fließt und der zweite Luftstrom im Luftspalt fließt, wobei die beiden Luftströme unter der Wirkung von zwei Lüftern von einem Ende der Maschine zum anderen fließen und die ersten und zweiten Luftströme sich vereinigen, bevor sie den zweiten Lüfter erreichen.

## Claims

1. An electric rotating machine comprising a rotor (10) rotating relative to a stator (4), the rotor rotating a first fan (40) placed at a first end of the stator, and a second fan (50) placed at a second end of the stator opposite to the first end, the first and second fans being configured to generate an air flow from the first fan to the second fan through the rotor and the stator, the first fan comprising an external ring (42) connecting the radial ends of blades (43) together, a first air flow (F1) can flow in at least one channel arranged between the stator, notably a packet of metal sheets of the stator, and a casing of the machine,
machine wherein a second air flow (F2) can flow in the gap, and
wherein the fans are arranged in order to cause the air of the first and second air flows to join before reaching the second fan (50).

2. The machine as claimed in the preceding claim, wherein the second fan is configured to create a pressure reduction in the machine and to generate an outgoing air flow.

3. The machine as claimed in either one of the preceding claims, wherein the first fan is configured to generate an incoming air flow into the machine.

4. The machine as claimed in any one of the preceding claims, wherein the first fan comprises an internal ring (41) which is held on a shaft of the machine, and blades (43) extending from the internal ring.

5. The machine as claimed in the preceding claim, wherein the blades are inclined relative to the axis of rotation of the machine.

6. The machine as claimed in any preceding claims, wherein the first and second air flows are formed from one or more common air inlets.

7. The machine as claimed in any one of the preceding claims, the machine forming an alternator.

8. The machine as claimed in the preceding claim, wherein the air enters the machine through openings placed around an exciter of the machine.

9. The machine as claimed in any one of the preceding claims, the first fan being axial or helico-centrifugal.

10. The machine as claimed in any one of the preceding claims, the second fan being centrifugal or helico-centrifugal.

11. A method for cooling an electric rotating machine, wherein the cooling takes place by causing two air flows to flow between air inlets and air outlets, the first air flow flowing between the stator and the casing of the machine and the second air flow flowing in the gap, the two air flows flowing from one end to the other of the machine under the action of two fans, the first and second air flows joining before reaching the second fan.
